# EUROPEAN PATENT APPLICATION

(11) **EP 4 417 040 A1**
(43) Date of publication of application: **21.08.2024**
(21) Application number: 22880616.2
(22) Date of filing: 01.08.2022
(51) Int. Cl.: A01K 1/01

(54) **ANIMAL TOILET**

(30) Priority: 11.10.2021 JP 2021166552
(71) Applicant: Daiki Co., Ltd., Tokyo 102-0072 (JP)
(72) Inventor: YOSHINAGA Junji, Tokyo 107-0052 (JP)
(74) Representative: Müller-Boré & Partner Patentanwälte PartG mbB
(86) International application number: PCT/JP2022/029494
(87) International publication number: WO 2023/062916

(57) **Abstract**

Provided is an animal toilet suitable for improving test accuracy of urine. An animal toilet (1) includes a partition portion (20), an upper space (24), a lower space (26), and a urine collection receptacle (40). The partition portion (20) has a through hole (22) allowing urine to pass therethrough. The upper space (24) is present above the partition portion (20), and is a space in which a plurality of grains (30) are disposed. The lower space (26) is present below the partition portion (20), and is a space in which the urine having passed through the through hole (22) falls. The urine collection receptacle (40) is a receptacle that collects the urine. A bottom face (28) of the lower space (26) inclines so that the urine having fallen in the lower space (26) will flow toward the urine collection receptacle (40).

## Description

### Technical Field

The present invention relates to an animal toilet.

### Background Art

A conventional animal toilet is disclosed, for example, in Patent Document 1. The animal toilet disclosed in Patent Document 1 includes a tray-shaped body portion (toilet container), and an excrement treatment material laid in the body portion. The excrement treatment material is composed of a mixture of a base grain that is a water-absorbent grain, and a drug grain that is a grain containing a test drug. The test drug is a drug for a urine test that is discolored depending on components of animal urine. In this animal toilet, the test drug is discolored when excreted urine comes in contact with the test drug in the drug grain.

### Citation List

### Patent Document

Patent Document 1: JP 2015-226503 A

### Summary of Invention

### Technical Problem

According to the animal toilet described above, it is possible to test animal urine by watching the color of the discolored test drug. However, in the case where the test drug contained in the grain (drug grain) is used in this way, there is a problem that test results are likely to be affected by components of materials constituting the grain. This has been a factor in lowering test accuracy of urine in the conventional animal toilet.

The present invention has been made in view of the above-described problem, and it is an object thereof to provide an animal toilet suitable for improving test accuracy of urine.

### Solution to Problem

An animal toilet according to the present invention includes: a partition portion that has a through hole allowing urine to pass therethrough; an upper space in which a plurality of grains are disposed, the upper space being present above the partition portion; a lower space in which the urine having passed through the through hole falls, the lower space being present below the partition portion; and a urine collection receptacle that collects the urine, wherein a bottom face of the lower space inclines so that the urine having fallen in the lower space will flow toward the urine collection receptacle.

In this animal toilet, the bottom face of the lower space inclines so that urine having passed through the through hole to fall in the lower space will flow toward the urine collection receptacle. Therefore, urine excreted by an animal accumulates in the urine collection receptacle. Thus, it is possible to collect urine in a state of being independent of the grains. Using the urine as a test object makes test results less likely to be affected by components of materials constituting the grains.

### Advantageous Effects of Invention

According to the present invention, it is possible to implement an animal toilet suitable for improving test accuracy of urine.

### Brief Description of Drawings

FIG. 1 is an end view showing an embodiment of an animal toilet according to the present invention.
FIG. 2 is a plane view showing a partition portion 20.
FIG. 3 is an end view showing a body container 10.
FIG. 4 is a front view showing the body container 10.
FIG. 5 is a plane view showing the body container 10.
FIG. 6 is an end view taken along line VI-VI in FIG. 5.
FIG. 7 is an end view showing a urine collection receptacle 40.
FIG. 8 is a diagram for illustrating an example of structure for fixing the urine collection receptacle 40 to the body container 10 detachably.
FIG. 9 is a diagram for illustrating the example of structure for fixing the urine collection receptacle 40 to the body container 10 detachably.
FIG. 10 is a diagram for illustrating a modified example of an opening 12.
FIG. 11 is a diagram for illustrating another modified example of the opening 12.
FIG. 12 is a diagram for illustrating another modified example of the opening 12.
FIG. 13 is an end view for illustrating a modified example of the animal toilet in FIG. 1.
FIG. 14 is an end view for illustrating another modified example of the animal toilet in FIG. 1.

### Description of Embodiments

Hereinafter, an embodiment of the present invention will be described in detail with reference to the drawings. In the description of the drawings, the same elements are given the same reference numerals, and a redundant description will be omitted.

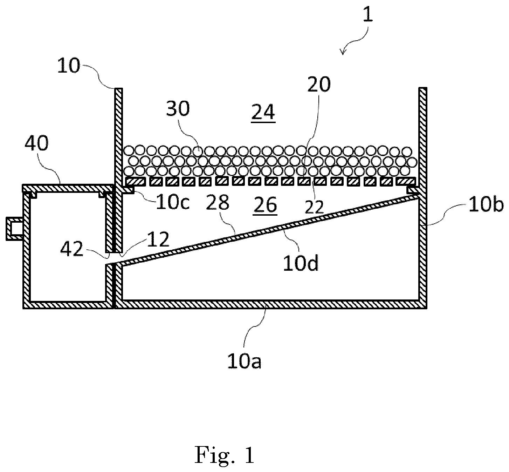

FIG. 1 is an end view showing an embodiment of an animal toilet according to the present invention. An animal toilet 1 is a toilet used for excretion of animals such as cats or dogs, and includes a body container 10, a partition portion 20, a plurality of grains 30, and a urine collection receptacle 40. The body container 10 has a bottom face part 10a (first bottom face part) and a side face part 10b (first side face part), and is in a box shape. The outer shape of the body container 10 is an approximately rectangular parallelepiped shape. As a material of the body container 10, for example, plastic such as polypropylene or polyethylene can be used.

The body container 10 has an overhanging part 10c that is provided so as to overhang from the side face part 10b toward the inside of the body container 10. The overhanging part 10c may be a projection or a projected rim. The overhanging part 10c may be formed integrally with the side face part 10b, or may be attached to the side face part 10b after being formed separately from the side face part 10b. The overhang length of the overhanging part 10c (the length in the direction perpendicular to the inner surface of the side face part 10b provided with the overhanging part 10c) is, for example, between 5 mm and 15 mm inclusive.

The partition portion 20 is placed on the overhanging part 10c. The partition portion 20 is not fixed to the body container 10. The partition portion 20 is detachable relative to the body container 10. The partition portion 20 has a plate shape, and is arranged in parallel with the bottom face part 10a. The partition portion 20 is provided at a position apart from both the bottom face part 10a and the upper end of the body container 10. Thus, the partition portion 20 divides the inside of the body container 10 vertically. That is, the partition portion 20 is disposed so as to divide the internal space of the body container 10 into an upper space 24 and a lower space 26. Therefore, the internal space of the body container 10 includes at least the lower space 26. In the present embodiment, the internal space of the body container 10 includes both the upper space 24 and the lower space 26.

The upper space 24 is present above the partition portion 20, and is a space in which the plurality of grains 30 are disposed. The lower space 26 is present below the partition portion 20, and is a space in which urine that has passed through a through hole 22 falls. In this way, the animal toilet 1 includes the upper space 24 and the lower space 26 that are separated by the partition portion 20.

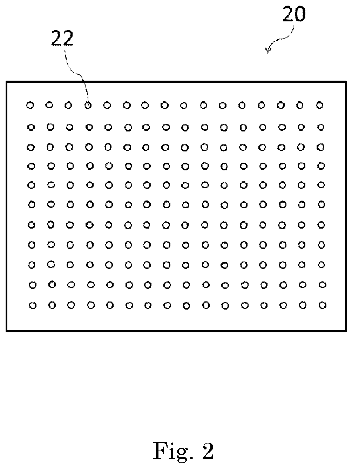

FIG. 2 is a plane view showing the partition portion 20. The partition portion 20 has an approximately rectangular shape in a plane view. As used herein, "approximately rectangular shape" means that the shape includes not only a rectangle but also a shape similar to a rectangle such as a round corner rectangle. The partition portion 20 has the through hole 22 that allows urine to pass through the through hole 22. The partition portion 20 has a plurality of the through holes 22. The plurality of through holes 22 are arranged two-dimensionally in the partition portion 20. The plane shape of each through hole 22 is a circle. Each through hole 22 allows urine to pass therethrough, but does not allow the grain 30 to pass therethrough. As a material of the partition portion 20, for example, plastic such as polypropylene or polyethylene can be used.

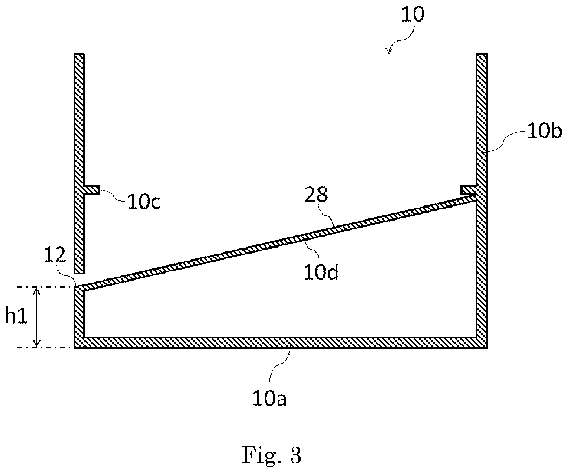

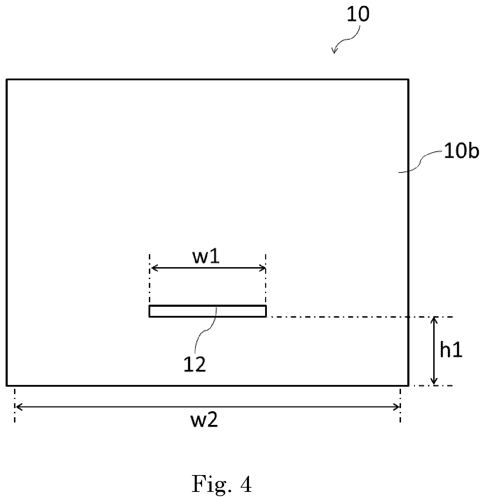

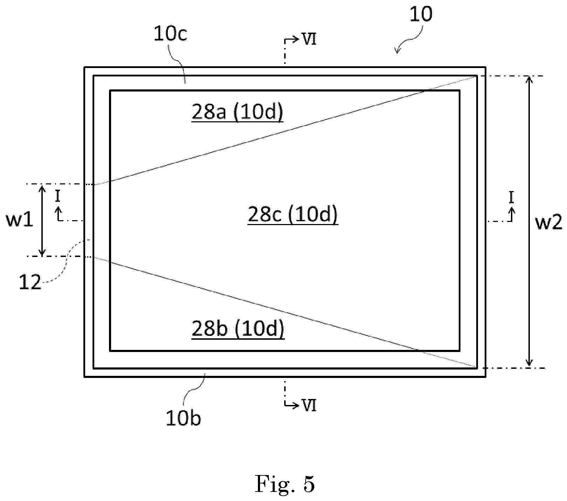

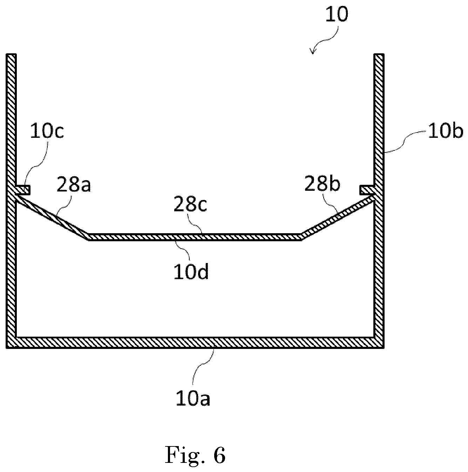

FIG. 3, FIG. 4 and FIG. 5 are, respectively, an end view, a front view and a plane view showing the body container 10. Also, FIG. 6 is an end view taken along line VI-VI in FIG. 5. Note that the end face of the body container 10 shown in FIG. 1 is the end face taken along I-I in FIG. 5. The side face part 10b of the body container 10 is provided with an opening 12 (first opening). The opening 12 has a horizontally long shape. The vertical length (the length in the top/bottom direction of the side face part 10b) of the opening 12 is, for example, between 3 mm and 10 mm inclusive. The horizontal length (the length in the right/left direction of the side face part 10b provided with the opening 12) of the opening 12 is, for example, between 30 mm and 100 mm inclusive. The horizontal length w1 (see FIG. 4 and FIG. 5) of the opening 12 is smaller than the horizontal width (inner size) w2 of the side face part 10b provided with the opening 12. The length w1 is preferably one-third or less of the horizontal width w2.

When taking a floor surface on which the body container 10 is placed as a reference, the height h1 (see FIG. 3 and FIG. 4) of the lower end of the opening 12 is preferably 30 mm or more. The height h1 is equal to the distance from the lower end of the side face part 10b to the lower end of the opening 12. Also, as can be seen from FIG. 3, the bottom face of the opening 12 inclines downward toward the outside of the body container 10. In other words, the bottom face of the opening 12 inclines downward from the inner surface of the side face part 10b toward the outer surface of the side face part 10b. The opening 12 is a part through which urine excreted in the body container 10 is discharged outside the body container 10.

A bottom face 28 of the lower space 26 inclines so that urine having fallen in the lower space 26 will flow toward the urine collection receptacle 40 described later. Specifically, the bottom face 28 inclines so that the urine will flow into the opening 12. The urine having flowed on the bottom face 28 arrives in the urine collection receptacle 40 through the opening 12. The bottom face 28 is continuous with the bottom face of the opening 12. In the present embodiment, the entirety of the bottom face 28 inclines. Nothing is laid on the bottom face 28 in order not to prevent urine from flowing. As can be seen from FIG. 5 and FIG. 6, the bottom face 28 is composed of a plurality of continuous planes 28a, 28b, 28c. The plane 28a and the plane 28b incline downward toward the plane 28c. The plane 28c inclines downward toward the opening 12. Note that the overhanging part 10c is composed of a projected rim that is provided annularly over the entirety of the inner surface of the side face part 10b in a plane view in the present embodiment (see FIG. 5).

As shown in FIG. 3, the body container 10 includes an intermediate plate 10d. The intermediate plate 10d is provided between the bottom face part 10a and the partition portion 20. The intermediate plate 10d is disposed obliquely to the bottom face part 10a and the partition portion 20. The upper surface of the intermediate plate 10d constitutes the bottom face 28 of the lower space 26. The peripheral part of the intermediate plate 10d is connected to the side face part 10b of the body container 10. The entire peripheral part of the intermediate plate 10d is connected to the side face part 10b without a gap so that urine will not leak into the space below the intermediate plate 10d (the space surrounded by the bottom face part 10a, the side face part 10b and the intermediate plate 10d) in the body container 10. The intermediate plate 10d may be formed integrally with the side face part 10b, or may be attached to the side face part 10b after being formed separately from the side face part 10b.

Returning to FIG. 1, the plurality of grains 30 for treating excrement (urine) are disposed in the upper space 24. The plurality of grains 30 are disposed in the upper space 24 in a state of being laid on the partition portion 20. When the animal toilet 1 is used, the grains 30 directly receive excreted urine. The grains 30 have a hydrophobic property. That is, the grains 30 have the property of not absorbing liquid such as urine at all, or hardly absorbing it.

The grains 30 having the hydrophobic property require the liquid passing rate of 80 % or more measured by the following test. First, approximate 50 grams of the grains 30 (sample) are placed in a sieve with the inner diameter of 10 cm and the mesh size of 1 mm. An empty beaker is set under the sieve. Then, 30 ml of water is dripped on the sample over 10 seconds using a syringe with the inner diameter of its outer cylinder of 3 cm and the inner diameter of its cylinder tip of 4 mm (60 ml syringe manufactured by Terumo Corp.). After waiting 1 minute, the quantity of the water in the beaker is measured. The ratio of the measured water quantity with respect to the quantity of the dripped water (30 ml) shall be the liquid passing rate. That is, if the water quantity in the beaker is 24 ml or more, the liquid passing rate is 80 % or more, and therefore the grains 30 are found to have the hydrophobic property. For reference, the liquid passing rate of general water-absorbing cat litter, which is commercially available, is about 5 %.

The grains 30 are each formed in a granular shape. Examples of the granular shape include a sphere, column, and ellipsoid. The particle diameter of the grain 30 is, for example, between 5 mm and 20 mm inclusive. As used herein, the particle diameter is defined as the diameter of the minimum sphere that can include the grain 30. It is preferable that the grain 30 contains an organic substance as its main material, and it is particularly preferable that the grain 30 is made only of the organic substance. As used herein, the main material refers to the material that accounts for the highest weight ratio in the grain 30, out of one or more materials constituting the grain 30. As the organic substance, for example, papers, used tea leaves, plastics, or bean curd lees can be used.

The papers refer to a material composed mainly of pulp. Examples of the papers include, in addition to ordinary paper, a vinyl chloride wallpaper classified product, photographic paper, release paper, fluff pulp, papermaking sludge, and pulp sludge. The vinyl chloride wallpaper classified product is obtained by removing part of polyvinyl chloride from vinyl chloride wallpaper containing paper and polyvinyl chloride. Examples of the plastics include, in addition to ordinary plastic, an aluminum deposited film, and a disposable diaper classified product (plastic obtained by classifying disposable diapers). The bean curd lees are preferably dried bean curd lees. These materials may be subjected to hydrophobic treatment (water repellency treatment).

The material(s) constituting the grain 30 may be only one material, or two or more materials. In the former case, the main material described above is the only material constituting the grain 30. In the latter case, the grain 30 is made of a mixture of the main material and other material(s). Examples of the other material include gypsum, and baking soda. Adding gypsum or baking soda can enhance the hydrophobic property of the grain 30. The quantity of gypsum or baking soda is, for example, 5 wt.% or more and less than 50 wt.% with respect to the entirety of the grain 30.

The grains 30 can be manufactured by, for example, the following method. First, granules that will serve as the grains 30 are formed by granulating a granulating material (the material(s) constituting the grains 30) with a granulation apparatus. As the granulation apparatus, for example, an extrusion granulator can be used. The granules may be subjected to hydrophobic treatment as needed. The hydrophobic treatment can be performed by, for example, coating the surfaces of the granules with a hydrophobic agent (water repellent agent). In the case where the hydrophobic treatment is not performed, it is preferable that crevices are prevented from forming in the granules as much as possible by increasing the pressure that is applied to the granulating material during granulation. This is because the crevices serve as a path through which moisture such as urine enters inside the grains 30. Prior to the granulation, pretreatment such as pulverization, kneading, and adding water is performed on the granulating material as needed. Also, after the granulation, posttreatment such as sieving (sizing), and drying is performed as needed.

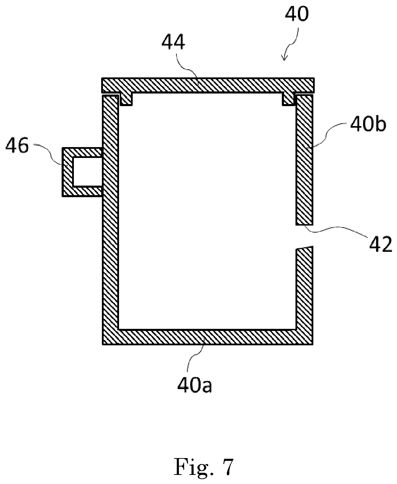

FIG. 7 is an end view showing the urine collection receptacle 40. The urine collection receptacle 40 is a receptacle that collects urine. The urine collection receptacle 40 houses only urine. Therefore, the urine collection receptacle 40 is empty before use (before urine is collected by the urine collection receptacle 40). The urine collection receptacle 40 has a bottom face part 40a (second bottom face part) and a side face part 40b (second side face part), and is in a box shape. The outer shape of the urine collection receptacle 40 is an approximately rectangular parallelepiped shape similarly with the outer shape of the body container 10. However, the capacity of the urine collection receptacle 40 is smaller than the capacity of the body container 10. Also, the height of the urine collection receptacle 40 is smaller than the height of the body container 10.

The side face part 40b is provided with an opening 42 (second opening). The opening 42 is provided so that urine discharged from the opening 12 will flow into the urine collection receptacle 40. That is, the urine having flowed on the bottom face 28 of the lower space 26 arrives in the urine collection receptacle 40 through the opening 12 and the opening 42. The opening 42 has approximately the same shape and size as the opening 12. Strictly, the shape and size of the opening 12 in the outer surface of the side face part 10b coincide with the shape and size of the opening 42 in the outer surface of the side face part 40b. The bottom face of the opening 42 inclines downward toward the inside of the urine collection receptacle 40. In other words, the bottom face of the opening 42 inclines downward from the outer surface of the side face part 40b toward the inner surface of the side face part 40b.

The urine collection receptacle 40 includes a lid portion 44 that covers the space surrounded by the bottom face part 40a and the side face part 40b from above. The lid portion 44 is provided openably and closably. When the animal toilet 1 is used, the lid portion 44 is closed. In the state in which the lid portion 44 is closed, the urine collection receptacle 40 is hermetically sealed except for the opening 42. Also, the urine collection receptacle 40 is provided with a grip 46. Specifically, the grip 46 is provided to the side face part 40b opposite to the side face part 40b provided with the opening 42. As a material of the urine collection receptacle 40, for example, plastic such as polypropylene or polyethylene can be used.

When the animal toilet 1 is used, the urine collection receptacle 40 is disposed outside the body container 10 (see FIG. 1). The urine collection receptacle 40 is disposed in a state of being in contact with the side face part 10b provided with the opening 12 without a gap. At this time, the opening 42 of the urine collection receptacle 40 overlaps with the opening 12 of the body container 10. In the present embodiment, the opening 12 and the opening 42 overlap with each other completely. That is, the entirety of the opening 12 overlaps with the opening 42, and the entirety of the opening 42 also overlaps with the opening 12. The upper end of the side face part 40b is located higher than the upper end of the opening 12.

The urine collection receptacle 40 is fixed to the body container 10 detachably. As used herein, "detachably" means that the urine collection receptacle 40 can be easily attached to and detached from the body container 10 without causing damage to the body container 10 or the urine collection receptacle 40.

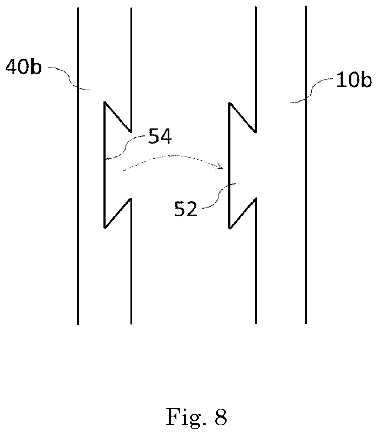

This configuration can be realized by providing a projected rim 52 in the side face part 10b and providing a groove 54 in the side face part 40b as shown, for example, in FIG. 8. FIG. 8 is a diagram in which the side face part 10b and the side face part 40b are seen from above. The projected rim 52 is provided in a part of the side face part 10b that faces the side face part 40b. The projected rim 52 has a tapered cross-sectional shape in which the width thereof widens as going away from the side face part 10b, and extends in the top/bottom direction of the side face part 10b (the direction perpendicular to the paper surface in FIG. 8). On the other hand, the groove 54 is provided in a part of the side face part 40b that faces the side face part 10b. The groove 54 has a tapered cross-sectional shape in which the width thereof widens as approaching the inside of the side face part 40b, and extends in the top/bottom direction of the side face part 40b. The cross-section of the groove 54 has approximately the same shape and size as the cross-section of the projected rim 52.

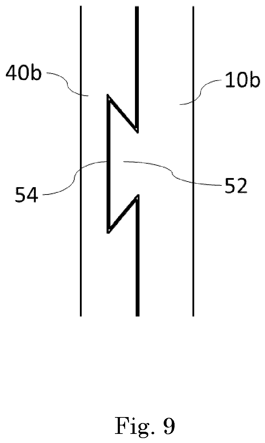

The urine collection receptacle 40 can be attached and fixed to the body container 10 by sliding the urine collection receptacle 40 in the top/bottom direction relative to the body container 10 to make the projected rim 52 and the groove 54 be fitted to each other as shown in FIG. 9. Also, the urine collection receptacle 40 can be detached from the body container 10 by sliding the urine collection receptacle 40 in the top/bottom direction relative to the body container 10 to make the projected rim 52 and the groove 54 be disengaged from each other.

When the animal toilet 1 is used, urine excreted on the grains 30 flows downward, passing through gaps between the grains 30. The urine falls from the upper space 24 to the lower space 26 via the through holes 22 of the partition portion 20. The urine having fallen in the lower space 26 flows into the urine collection receptacle 40 through the opening 12 and the opening 42 after flowing on the bottom face 28.

The effects of the animal toilet 1 will be described. In the animal toilet 1, the bottom face 28 of the lower space 26 inclines so that urine having passed through the through hole 22 to fall in the lower space 26 will flow toward the urine collection receptacle 40. Therefore, urine excreted by an animal accumulates in the urine collection receptacle 40. Thus, it is possible to collect urine in a state of being independent of the grains 30. Using the urine as a test object makes test results less likely to be affected by components of materials constituting the grains 30. Accordingly, the animal toilet 1 suitable for improving test accuracy of urine is implemented.

Testing the urine accumulating in the urine collection receptacle 40 makes it possible to grasp various information concerning urine such as urine quantity, specific gravity of urine, frequency of urination, occult blood in urine, urinary protein, urinary sugar, and urinary pH at high accuracy. Thus, animal health can be preferably checked. In this way, according to the animal toilet 1, a urine test can be performed more precisely and detailedly than the conventional animal toilet.

The entirety of the bottom face 28 of the lower space 26 inclines. Thus, urine can flow toward the urine collection receptacle 40 regardless of on what position of the bottom face 28 the urine falls.

The urine collection receptacle 40 is disposed outside the body container 10. In this case, it becomes easier to collect urine accumulating in the urine collection receptacle 40 than in a case where the urine collection receptacle 40 is disposed inside the body container 10.

The height of the urine collection receptacle 40 is smaller than the height of the body container 10. In this case, the urine collection receptacle 40 can be used also as a stool when an animal enters or leaves the body container 10. Thus, it becomes easier for the animal to enter or leave the body container 10.

The side face part 10b of the body container 10 is provided with the opening 12. Thus, urine can be guided to the urine collection receptacle 40 disposed outside the body container 10 with simple constitution.

The opening 12 has a horizontally long shape. That is, the opening 12 is longer horizontally and shorter vertically. Liquid such as urine has a tendency to spread out horizontally. Therefore, enlarging the horizontal length of the opening 12 facilitates the quick passage of a large amount of urine. Thus, even in a case where a large amount of urine is excreted, the urine can be smoothly discharged outside the body container 10 through the opening 12. On the other hand, reducing the vertical length of the opening 12 is advantageous for preventing a solid (e.g. a part of the grain 30 that has collapsed) from passing through the opening 12.

The horizontal length of the opening 12 is smaller than the horizontal width of the side face part 10b provided with the opening 12. That is, the opening 12 is provided in only a part of the side face part 10b with respect to the right/left direction of the side face part 10b. Thus, it becomes easier to restrain an odor generated from the urine discharged outside the body container 10 from flowing into the body container 10 through the opening 12, compared to a case where the opening 12 is provided in the entirety of the side face part 10b. From this viewpoint, the horizontal length of the opening 12 is preferably one-third or less of the horizontal width of the side face part 10b.

The bottom face of the opening 12 inclines downward toward the outside of the body container 10. Thus, urine excreted in the body container 10 can be more smoothly discharged outside the body container 10 through the opening 12.

The urine collection receptacle 40 is disposed in the state of being in contact with the side face part 10b provided with the opening 12 without a gap. Thus, the urine discharged from the opening 12 can be guided directly into the urine collection receptacle 40 without providing a means of transferring the urine between the body container 10 and the urine collection receptacle 40.

The urine collection receptacle 40 includes the lid portion 44 that covers the space surrounded by the bottom face part 40a and the side face part 40b from above. Thus, an odor generated from the urine accumulating in the urine collection receptacle 40 can be prevented from leaking outside from the upper part of the urine collection receptacle 40.

The upper end of the side face part 40b is located higher than the upper end of the opening 12 in the state in which the urine collection receptacle 40 is disposed in the animal toilet 1. Thus, an odor generated from the urine accumulating in the urine collection receptacle 40 can be restrained from flowing into the body container 10 through the opening 12.

The side face part 40b is provided with the opening 42. Thus, urine discharged from the opening 12 can be guided into the urine collection receptacle 40 with simple constitution. That is, the urine discharged from the opening 12 flows into the urine collection receptacle 40 through the opening 42 that is continuous with the opening 12. Also, because urine can be taken into the urine collection receptacle 40 from the side face part 40b, it is possible to enlarge the height of the side face part 40b freely.

The bottom face of the opening 42 inclines downward toward the inside of the urine collection receptacle 40. Thus, urine discharged from the opening 12 can more smoothly flow into the urine collection receptacle 40 through the opening 42.

Locating the opening 12 (and the opening 42) at a high position is advantageous for preventing the urine accumulating in the urine collection receptacle 40 from leaking outside the urine collection receptacle 40 through the opening 42. From this viewpoint, the height h1 (see FIG. 3) of the lower end of the opening 12 is preferably 30 mm or more.

The urine collection receptacle 40 is detachable relative to the body container 10. Thus, it becomes easier to collect the urine accumulating in the urine collection receptacle 40, or to clean the body container 10 and the urine collection receptacle 40. That is, detaching the urine collection receptacle 40 from the body container 10 makes it easier to collect or clean urine.

The urine collection receptacle 40 is provided with the grip 46. Thus, the urine collection receptacle 40 can be attached to and detached from the body container 10 easily.

The internal space of the body container 10 includes both the upper space 24 and the lower space 26. In this case, it is possible to implement the animal toilet 1 including the upper space 24 and the lower space 26 with one container (the body container 10). This is advantageous for simplifying the constitution of the animal toilet 1.

The partition portion 20 is not fixed to the body container 10. In this case, the partition portion 20 can be attached to and detached from the body container 10 easily.

The partition portion 20 is placed on the overhanging part 10c. Thus, the partition portion 20 can stay at a predetermined position in the body container 10 without being fixed to the body container 10.

Each grain 30 has a hydrophobic property. In this case, most of urine excreted on the grains 30 is not absorbed by the grains 30, and passes through gaps between the grains 30. Thus, a large amount of urine can be guided to the urine collection receptacle 40.

In the case where each grain 30 contains an organic substance as its main material, it is possible to obtain the grains 30 suitable for being disposed of by incineration. If the grains 30 are suitable for being disposed of by incineration in this way, the grains 30 after use can be disposed of as burnable garbage, which therefore increases convenience for users. In the case where each grain 30 is made only of the organic substance, it is possible to obtain the grains 30 particularly suitable for being disposed of by incineration.

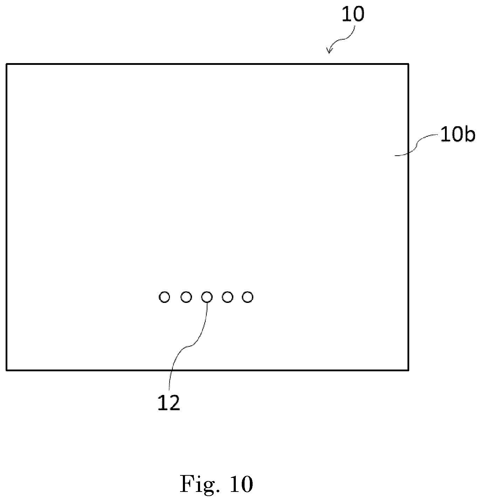

The present invention is not limited to the above-described embodiment, and various modifications can be made. In the above-described embodiment, the shape, the size, the position, and the number of the opening 12 are arbitrary. For, example, a plurality of the openings 12 may be provided as shown in FIG. 10. In FIG. 10, five openings 12 having a circular shape in a front view are provided. These openings 12 are arranged on a straight line at regular intervals in the right/left direction of the side face part 10b. Similarly, the shape, the size, the position, and the number of the opening 42 are also arbitrary.

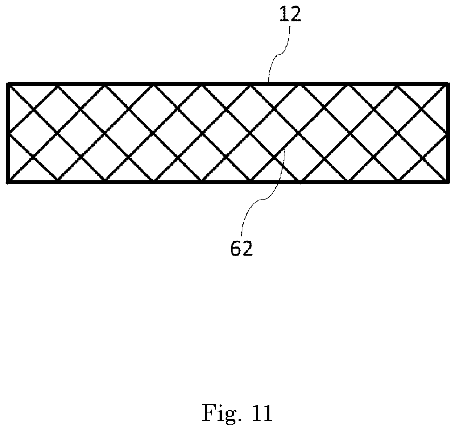

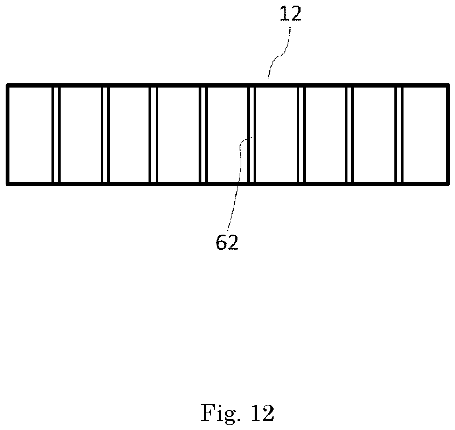

In the above-described embodiment, the opening 12 may be provided with a block member 62 that blocks a part of the opening 12 as shown, for example, in FIG. 11 and FIG. 12. The block member 62 in FIG. 11 has a net shape. The block member 62 in FIG. 12 has a comb shape. Providing the block member 62 can make a solid less likely to pass through the opening 12.

In the above-described embodiment, an example is given in which the entirety of the bottom face 28 of the lower space 26 inclines. However, only a part of the bottom face 28 may incline.

In the above-described embodiment, an example is given in which the plane shape of the through hole 22 is a circle. However, the plane shape of the through hole 22 is arbitrary, and may be, for example, a polygon such as a rectangle, or an ellipse.

In the above-described embodiment, the animal toilet 1 may include water absorbing materials that are housed in the urine collection receptacle 40, and absorb urine. The water absorbing materials are housed in the water absorbing material as needed. The shape of the water absorbing materials is arbitrary, and is, for example, granular, powdery, or sheet. In the case where the water absorbing materials are granular or powdery, the water absorbing materials may be configured to bond together and agglomerate when absorbing urine. The water absorbing materials may be provided on the entirety or only a part of the bottom face part 40a of the urine collection receptacle 40. In the case where the water absorbing materials are housed in the urine collection receptacle 40, at least some of urine accumulates in the urine collection receptacle 40 in a state of being absorbed in the water absorbing materials. For this reason, it is possible to restrain an odor from being generated from urine accumulating in the urine collection receptacle 40, and the urine can be easily disposed of. However, when collecting urine for a test, it is preferable that the urine collection receptacle 40 does not house the water absorbing materials, and therefore is empty before use. That is, in a case where it is not necessary to test urine whenever an animal urinates, the urine collection receptacle 40 may be empty only when wanting to collect urine for a test, and may house the water absorbing materials at any other time.

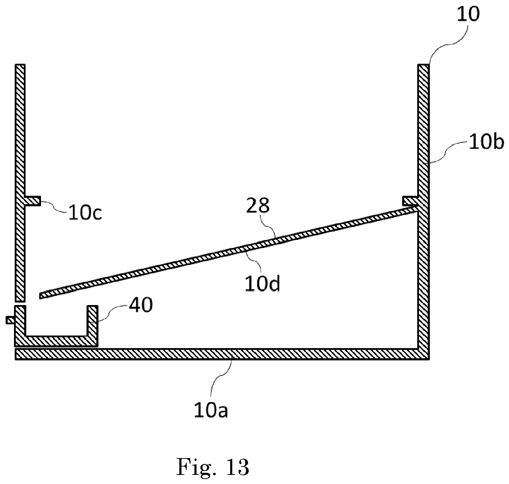

In the above-described embodiment, an example is given in which the urine collection receptacle 40 is disposed outside the body container 10. However, the urine collection receptacle 40 may be disposed inside the body container 10 as shown, for example, in FIG. 13. The urine collection receptacle 40 in FIG. 13 is disposed below the intermediate plate 10d. The urine collection receptacle 40 is configured to be capable of being inserted in and extracted from the body container 10 like a drawer. The lower end of the intermediate plate 10d is apart from the side face part 10b of the body container 10. Thus, urine having flowed on the bottom face 28 falls down from the lower end of the intermediate plate 10d into the urine collection receptacle 40.

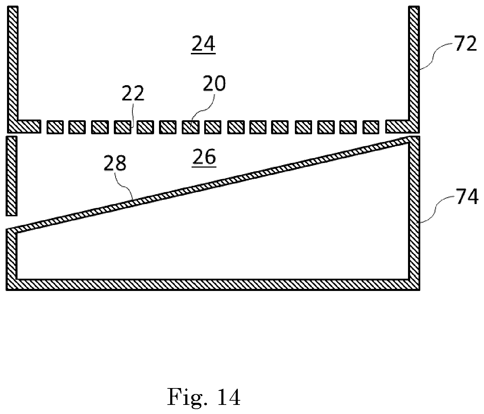

In the above-described embodiment, an example is given in which the upper space 24 and the lower space 26 are constituted by one body container 10. However, a container 72 constituting the upper space 24 and a container 74 constituting the lower space 26 may be provided separately as shown, for example, in FIG. 14. In FIG. 14, the container 72 and the container 74 each have a bottom face part and a side face part, and are in a box shape. The container 72 is put on the container 74. Moreover, the bottom face part of the container 72 is the partition portion 20.

### List of Reference Numerals

- 1: Animal Toilet
- 10: Body Container
- 10a: Bottom Face Part (First Bottom Face Part)
- 10b: Side Face Part (First Side Face Part)
- 10c: Overhanging Part
- 10d: Intermediate Plate
- 12: Opening (First Opening)
- 20: Partition Portion
- 22: Through Hole
- 24: Upper Space
- 26: Lower Space
- 28: Bottom Face
- 30: Grain
- 40: Urine Collection Receptacle
- 40a: Bottom Face Part (Second Bottom Face Part)
- 40b: Side Face Part (Second Side Face Part)
- 42: Opening (Second Opening)
- 44: Lid Portion
- 46: Grip
- 52: Projected Rim
- 54: Groove
- 62: Block Member
- 72: Container
- 74: Container

## Claims

1. An animal toilet comprising:
a partition portion that has a through hole allowing urine to pass therethrough;
an upper space in which a plurality of grains are disposed, the upper space being present above the partition portion;
a lower space in which the urine having passed through the through hole falls, the lower space being present below the partition portion; and
a urine collection receptacle that collects the urine,
wherein a bottom face of the lower space inclines so that the urine having fallen in the lower space will flow toward the urine collection receptacle.

2. The animal toilet according to claim 1,
wherein an entirety of the bottom face of the lower space inclines.

3. The animal toilet according to claim 1 or 2, further comprising:
a box-shaped body container that has a first bottom face part and a first side face part,
wherein an internal space of the body container includes the lower space.

4. The animal toilet according to claim 3,
wherein the urine collection receptacle is detachable relative to the body container.

5. The animal toilet according to claim 3 or 4,
wherein the urine collection receptacle is disposed outside the body container.

6. The animal toilet according to claim 5,
wherein a height of the urine collection receptacle is smaller than a height of the body container.

7. The animal toilet according to claim 5 or 6,
wherein the first side face part is provided with a first opening, and
the urine having flowed on the bottom face of the lower space arrives in the urine collection receptacle through the first opening.

8. The animal toilet according to claim 7,
wherein a height of a lower end of the first opening is 30 mm or more when taking a floor surface on which the body container is placed as a reference.

9. The animal toilet according to claim 7 or 8,
wherein the first opening has a horizontally long shape.

10. The animal toilet according to any one of claims 7 to 9,
wherein a horizontal length of the first opening is smaller than a horizontal width of the first side face part provided with the first opening.

11. The animal toilet according to claim 10,
wherein the horizontal length of the first opening is one-third or less of the horizontal width of the first side face part.

12. The animal toilet according to any one of claims 7 to 11,
wherein a bottom face of the first opening inclines downward toward an outside of the body container.

13. The animal toilet according to any one of claims 7 to 12,
wherein the first opening is provided with a block member that blocks a part of the first opening.

14. The animal toilet according to claim 13,
wherein the block member has a net shape or a comb shape.

15. The animal toilet according to any one of claims 7 to 14,
wherein the urine collection receptacle is disposed in a state of being in contact with the first side face part provided with the first opening without a gap.

16. The animal toilet according to claim 15,
wherein the urine collection receptacle has a second bottom face part and a second side face part, and is in a box shape.

17. The animal toilet according to claim 16,
wherein the urine collection receptacle includes a lid portion that covers a space surrounded by the second bottom face part and the second side face part from above.

18. The animal toilet according to claim 16 or 17,
wherein an upper end of the second side face part is located higher than an upper end of the first opening in a state in which the urine collection receptacle is disposed in the animal toilet.

19. The animal toilet according to any one of claims 16 to 18,
wherein the second side face part is provided with a second opening, and
the urine having flowed on the bottom face of the lower space arrives in the urine collection receptacle through the first and second openings.

20. The animal toilet according to claim 19,
wherein a bottom face of the second opening inclines downward toward an inside of the urine collection receptacle.

21. The animal toilet according to any one of claims 3 to 20,
wherein the internal space of the body container includes both the upper space and the lower space.

22. The animal toilet according to claim 21,
wherein the partition portion is not fixed to the body container.

23. The animal toilet according to claim 22,
wherein the body container has an overhanging part that is provided so as to overhang from the first side face part toward an inside of the body container, and
the partition portion is placed on the overhanging part.

24. The animal toilet according to any one of claims 1 to 23,
wherein the urine collection receptacle is provided with a grip.

25. The animal toilet according to any one of claims 1 to 24,
wherein each of the grains has a hydrophobic property.

26. The animal toilet according to any one of claims 1 to 24,
wherein each of the grains contains an organic substance as its main material.

27. The animal toilet according to claim 26,
wherein each of the grains is made only of the organic substance.

28. The animal toilet according to any one of claims 1 to 27, further comprising:
water absorbing materials that are housed in the urine collection receptacle, and absorb the urine.
